# FASCICULE DE BREVET EUROPEEN

(11) **EP 3 924 304 B1**
(45) Date de publication et mention de la délivrance du brevet: **17.07.2024**
(21) Numéro de dépôt: 20710226.0
(22) Date de dépôt: 14.02.2020
(51) Int. Cl.: C02F 1/467, E04H 4/12, C02F 103/42

(54) **CELLULE D'ÉLECTROLYSE POUR UN TRAITEMENT ÉLECTROLYTIQUE D'UN LIQUIDE**
ELEKTROLYSEZELLE ZUR ELEKTROLYTISCHEN BEHANDLUNG EINER FLÜSSIGKEIT
ELECTROLYSIS CELL FOR ELECTROLYTIC TREATMENT OF A LIQUID

(30) Priorité: 15.02.2019 FR 1901582
(43) Date de publication de la demande: 22.12.2021
(73) Titulaire: Pool Technologie, 34130 Valergues (FR)
(72) Inventeur: HUAULT, Jean-François, 72330 Cérans-Foulletourte (FR); OSANNO, Nicolas, 69270 Saint Romain au Mont d or (FR)
(74) Mandataire: Germain Maureau
(86) Numéro de dépôt international: PCT/FR2020/050275
(87) Numéro de publication internationale: WO 2020/165548

(56) Documents cités:
- FR-A1- 2 318 115
- JP-A- H0 416 284
- US-A- 4 119 518
- US-A1- 2018 119 295

## Description

La présente invention concerne une cellule d'électrolyse pour un traitement électrolytique d'un liquide, tel que de l'eau.

Les documents US4119518 A et JP H04 16284 A décrivent des exemples de cellules d'électrolyse connues.

Une cellule d'électrolyse pour un traitement électrolytique d'eau provenant d'un bassin, tel qu'une piscine, comporte de façon connue :
- un récipient délimitant une chambre d'électrolyse et comportant une entrée de liquide et une sortie de liquide qui sont reliées fluidiquement à la chambre d'électrolyse, le récipient comportant un axe longitudinal qui est sensiblement parallèle à une direction d'écoulement de l'eau à traiter à travers la chambre d'électrolyse,
- une source d'une solution aqueuse contenant du chlorure, telle que du chlorure de sodium, la source étant reliée fluidiquement à l'entrée de liquide du récipient,
- un premier ensemble d'électrodes et un deuxième ensemble d'électrodes qui sont disposées dans la chambre d'électrolyse et destinées à être au moins partiellement immergées dans l'eau à traiter, chaque électrode du deuxième ensemble étant disposée entre deux électrodes du premier ensemble,
- un ensemble de plaques conductrices qui sont disposées dans la chambre d'électrolyse et destinées à être au moins partiellement immergées dans l'eau à traiter, chaque plaque conductrice étant disposée entre une électrode du premier ensemble et une électrode du deuxième ensemble et étant maintenue isolée électriquement de la source d'alimentation électrique,
- une source d'alimentation électrique comportant une borne positive et une borne négative auxquelles chaque électrode des premier et deuxième ensembles est apte à être connectée électriquement, la source d'alimentation électrique étant configurée pour alimenter électriquement les électrodes des premier et deuxième ensembles,
- un dispositif de commutation configuré pour interrompre l'alimentation électrique des électrodes des premier et deuxième ensembles et pour modifier la connexion électrique entre les électrodes des premier et deuxième ensembles et les bornes positive et négative de la source d'alimentation électrique de manière à changer la polarité des électrodes des premier et deuxième ensembles, et
- une unité de commande configurée pour contrôler le dispositif de commutation selon un cycle de fonctionnement durant lequel chaque électrode des premier et deuxième ensembles passe par plusieurs états successifs selon une séquence prédéterminée comportant un état connecté dans lequel ladite électrode est à une première polarité, un état non connecté dans lequel ladite électrode est isolée électriquement de la source d'alimentation électrique, un état connecté dans lequel ladite électrode est à une deuxième polarité opposée à la première polarité et un état non connecté dans lequel ladite électrode est isolée électriquement de la source d'alimentation électrique.

L'unité de commande est plus particulièrement configurée pour contrôler le dispositif de commutation de telle sorte que lorsque les électrodes du premier ensemble sont reliées à la borne positive de la source d'alimentation électrique alors les électrodes du deuxième ensemble sont reliées à la borne négative de la source d'alimentation électrique, et de telle sorte que lorsque les électrodes du deuxième ensemble sont reliées à la borne positive de la source d'alimentation électrique alors les électrodes du premier ensemble sont reliées à la borne négative de la source d'alimentation électrique.

En outre, l'unité de commande est configurée pour contrôler le dispositif de commutation de telle sorte que les électrodes des premier et deuxième ensembles sont simultanément isolées électriquement de la source d'alimentation électrique.

Une telle configuration de la cellule d'électrolyse précitée, et en particulier le fait de réaliser des inversions régulières de la polarité des électrodes, permet d'enlever les dépôts de calcaire sur les électrodes qui sont nuisibles au bon fonctionnement de la cellule d'électrolyse. De plus, le passage intermédiaire par un état non connecté entre l'établissement de deux polarités opposées pour une même électrode permet de réaliser une inversion de polarité moins brutale et donc de réduire l'usure des électrodes.

Toutefois, une telle configuration de la cellule d'électrolyse induit une usure prématurée des électrodes par rapport aux plaques conductrices, et donc un remplacement fréquent de la cellule d'électrolyse.

La présente invention vise à remédier à tout ou partie de ces inconvénients.

Le problème technique à la base de l'invention consiste donc à fournir une cellule d'électrolyse qui soit de structure simple et économique, tout en présentant une durée de vie prolongée.

A cet effet, la présente invention concerne une cellule d'électrolyse pour un traitement électrolytique d'un liquide, comprenant au moins :
- un récipient délimitant une chambre d'électrolyse et comportant une entrée de liquide et une sortie de liquide qui sont reliées fluidiquement à la chambre d'électrolyse, le récipient comportant un axe longitudinal,
- un premier ensemble de plaques conductrices, un deuxième ensemble de plaques conductrices, un troisième ensemble de plaques conductrices et une quatrième ensemble de plaques conductrices qui sont disposées dans la chambre d'électrolyse et qui sont destinées à être au moins partiellement immergées dans le liquide à traiter, chaque plaque conductrice du deuxième ensemble étant disposée entre une plaque conductrice du premier ensemble et une plaque conductrice du troisième ensemble, chaque plaque conductrice du quatrième ensemble étant disposée entre une plaque conductrice du troisième et une plaque conductrice du premier ensemble, les plaques conductrices des premier, deuxième, troisième et quatrième ensembles étant électriquement conductrices et s'étendant radialement par rapport à l'axe longitudinal du récipient,
- une source d'alimentation électrique comportant une borne positive et une borne négative auxquelles chaque plaque conductrice des premier, deuxième et troisième ensembles est apte à être connectée électriquement, la source d'alimentation électrique étant configurée pour alimenter électriquement les plaques conductrices des premier, deuxième, troisième et quatrième ensembles,
- un dispositif de commutation configuré pour interrompre l'alimentation électrique des plaques conductrices des premier, deuxième, troisième et quatrième ensembles et pour modifier la connexion électrique entre les plaques conductrices des premier, deuxième, troisième et quatrième ensembles et les bornes positive et négative de la source d'alimentation électrique de manière à changer la polarité des plaques conductrices des premier, deuxième, troisième et quatrième ensembles, et
- une unité de commande configurée pour contrôler le dispositif de commutation selon un cycle de fonctionnement durant lequel chaque plaque conductrice des premier, deuxième, troisième et quatrième ensembles passe par plusieurs états successifs selon une séquence prédéterminée comportant un état connecté dans lequel ladite plaque conductrice est à une première polarité, un état non connecté dans lequel ladite plaque conductrice est isolée électriquement de la source d'alimentation électrique, un état connecté dans lequel ladite plaque conductrice est à une deuxième polarité opposée à la première polarité et un état non connecté dans lequel ladite plaque conductrice est isolée électriquement de la source d'alimentation électrique,
l'unité de commande étant configurée pour contrôler le dispositif de commutation de telle sorte que, pendant au moins une phase de fonctionnement dudit cycle de fonctionnement, les plaques conductrices de l'un des premier, deuxième, troisième et quatrième ensembles sont connectées électriquement à la borne positive de la source d'alimentation électrique, les plaques conductrices de l'un des premier, deuxième, troisième et quatrième ensembles sont connectées électriquement à la borne négative de la source d'alimentation électrique et les plaques conductrices des autres des premier, deuxième, troisième et quatrième ensembles sont isolées électriquement de la source d'alimentation électrique, chaque plaque conductrice isolée électriquement de la source d'alimentation électrique étant disposée entre une plaque conductrice connectée électriquement à la borne négative de la source d'alimentation électrique et une plaque conductrice connectée électriquement à la borne positive de la source d'alimentation électrique.

En d'autres termes, l'unité de commande est configurée pour contrôler le dispositif de commutation de telle sorte que, pendant au moins une phase de fonctionnement dudit cycle de fonctionnement, les plaques conductrices des premier, deuxième, troisième et quatrième ensembles sont maintenues dans une configuration dans laquelle les plaques conductrices de l'un des premier, deuxième, troisième et quatrième ensembles sont connectées électriquement à la borne positive de la source d'alimentation électrique, les plaques conductrices de l'un des premier, deuxième, troisième et quatrième ensembles sont connectées électriquement à la borne négative de la source d'alimentation électrique et les plaques conductrices de l'un des premier, deuxième, troisième et quatrième ensembles sont isolées électriquement de la source d'alimentation électrique, chaque plaque conductrice isolée électriquement de la source d'alimentation électrique étant disposée entre une plaque conductrice connectée électriquement à la borne négative de la source d'alimentation électrique et une plaque conductrice connectée électriquement à la borne positive de la source d'alimentation électrique.

Une telle configuration de la cellule d'électrolyse, et en particulier le fait que pendant au moins une phase de fonctionnement du cycle de fonctionnement, et de préférence pendant chaque phase de fonctionnement du cycle de fonctionnement, les plaques conductrices de l'un des ensembles de plaques sont connectées électriquement à la borne positive de la source d'alimentation électrique, les plaques conductrices de l'un des ensembles de plaques sont connectées électriquement à la borne négative de la source d'alimentation électrique et les plaques conductrices de l'un des ensembles de plaques sont isolées électriquement de la source d'alimentation électrique, permet d'une part de répartir l'usure sur toute les plaques conductrices, et non plus uniquement sur les électrodes, et d'autre part d'assurer un fonctionnement en continu de la cellule d'électrolyse.

Ainsi, la configuration spécifique de la cellule d'électrolyse selon la présente invention augmente de manière sensible les performances de traitement de cette dernière, et diminue sensiblement la fréquence de maintenance ou de remplacement de la cellule d'électrolyse, ce qui est très avantageux notamment dus aux coûts de fabrication élevés des plaques conductrices.

En outre, la disposition radiale des différentes plaques conductrices augmente sensiblement les surfaces utiles de chaque plaque conductrice, c'est-à-dire les surfaces de chaque plaque conductrice qui participe à l'électrolyse, ce qui permet soit de diminuer la taille des plaques conductrices et donc les coûts de fabrication de la cellule d'électrolyse, soit d'augmenter les performances de la cellule d'électrolyse.

La cellule d'électrolyse peut en outre présenter une ou plusieurs des caractéristiques suivantes, prises seules ou en combinaison.

Selon un mode de réalisation de l'invention, l'unité de commande est configurée pour contrôler le dispositif de commutation de telle sorte que, durant chaque phase de fonctionnement dudit cycle de fonctionnement, chaque plaque conductrice des premier, deuxième, troisième et quatrième ensembles est maintenue à un état différent de l'état dans lequel ladite plaque conductrice était durant la phase de fonctionnement précédente.

En d'autres termes, l'unité de commande est configurée pour contrôler le dispositif de commutation de telle sorte que, à chaque phase de fonctionnement dudit cycle de fonctionnement et pour chaque ensemble de plaques, la polarité des plaques conductrices d'un même ensemble de plaques est différente de la polarité desdites plaques conductrices durant la phase de fonctionnement précédente.

Selon un mode de réalisation de l'invention, l'axe longitudinal du récipient est sensiblement parallèle à une direction d'écoulement du liquide à traiter à travers la chambre d'électrolyse.

Selon un mode de réalisation de l'invention, le cycle de fonctionnement comporte une pluralité de phases de fonctionnement successives.

Selon un mode de réalisation de l'invention, les différentes phases de fonctionnement du cycle de fonctionnement présentent des durées de fonctionnement sensiblement identiques.

Selon un mode de réalisation de l'invention, l'unité de commande est configurée pour contrôler le dispositif de commutation de telle sorte que, durant chaque phase de fonctionnement dudit cycle de fonctionnement, les plaques conductrices de l'un des premier, deuxième, troisième et quatrième ensembles sont connectées électriquement à la borne positive de la source d'alimentation électrique, les plaques conductrices de l'un des premier, deuxième, troisième et quatrième ensembles sont connectées électriquement à la borne négative de la source d'alimentation électrique et les plaques conductrices de l'un des premier, deuxième, troisième et quatrième ensembles sont isolées électriquement de la source d'alimentation électrique.

Selon un mode de réalisation de l'invention, l'unité de commande est configurée pour contrôler le dispositif de commutation de telle sorte que, pendant chaque phase de fonctionnement dudit cycle de fonctionnement, les plaques conductrices de l'un des premier, deuxième, troisième et quatrième ensembles sont connectées électriquement à la borne positive de la source d'alimentation électrique, les plaques conductrices de l'un des premier, deuxième, troisième et quatrième ensembles sont connectées électriquement à la borne négative de la source d'alimentation électrique, et les plaques conductrices des autres des premier, deuxième, troisième et quatrième ensembles sont isolées électriquement de la source d'alimentation électrique, chaque plaque conductrice isolée électriquement de la source d'alimentation électrique étant disposée entre une plaque conductrice connectée électriquement à la borne négative de la source d'alimentation électrique et une plaque conductrice connectée électriquement à la borne positive de la source d'alimentation électrique

Selon un mode de réalisation de l'invention, l'unité de commande est configurée pour contrôler le dispositif de commutation de telle sorte que le cycle de fonctionnement comporte :
- une première phase de fonctionnement durant laquelle le dispositif de commutation connecte les plaques conductrices du premier ensemble à la borne positive de la source d'alimentation électrique, isole les plaques conductrices du deuxième ensemble de la source d'alimentation électrique, connecte les plaques conductrices du troisième ensemble à la borne négative de la source d'alimentation électrique, et isole les plaques conductrices du quatrième ensemble de la source d'alimentation électrique,
- une deuxième phase de fonctionnement durant laquelle le dispositif de commutation isole les plaques conductrices du premier ensemble de la source d'alimentation électrique, connecte les plaques conductrices du deuxième ensemble à la borne négative de la source d'alimentation électrique, isole les plaques conductrices du troisième ensemble de la source d'alimentation électrique, et connecte les plaques conductrices du quatrième ensemble à la borne positive de la source d'alimentation électrique,
- une troisième phase de fonctionnement durant laquelle le dispositif de commutation connecte les plaques conductrices du premier ensemble à la borne négative de la source d'alimentation électrique, isole les plaques conductrices du deuxième ensemble de la source d'alimentation électrique, connecte les plaques conductrices du troisième ensemble à la borne positive de la source d'alimentation électrique, et isole les plaques conductrices du quatrième ensemble de la source d'alimentation électrique, et
- une quatrième phase de fonctionnement durant laquelle le dispositif de commutation isole les plaques conductrices du premier ensemble de la source d'alimentation électrique, connecte les plaques conductrices du deuxième ensemble à la borne positive de la source d'alimentation électrique, isole les plaques conductrices du troisième ensemble de la source d'alimentation électrique, et connecte les plaques conductrices du quatrième ensemble à la borne négative de la source d'alimentation électrique.

En d'autres termes, l'unité de commande est configurée pour contrôler le dispositif de commutation de telle sorte que :
- pendant une première phase de fonctionnement du cycle de fonctionnement, les plaques conductrices des premier, deuxième, troisième et quatrième ensembles sont maintenues dans une première configuration dans laquelle les plaques conductrices du premier ensemble sont connectées à la borne positive de la source d'alimentation électrique, les plaques conductrices du deuxième ensemble sont isolées de la source d'alimentation électrique, les plaques conductrices du troisième ensemble sont connectées à la borne négative de la source d'alimentation électrique, et les plaques conductrices du quatrième ensemble sont isolées de la source d'alimentation électrique,
- pendant une deuxième phase de fonctionnement du cycle de fonctionnement, les plaques conductrices des premier, deuxième, troisième et quatrième ensembles sont maintenues dans une deuxième configuration dans laquelle les plaques conductrices du premier ensemble sont isolées de la source d'alimentation électrique, les plaques conductrices du deuxième ensemble sont connectées à la borne négative de la source d'alimentation électrique, les plaques conductrices du premier ensemble sont isolées de la source d'alimentation électrique, les plaques conductrices du quatrième ensemble sont connectées à la borne positive de la source d'alimentation électrique,
- pendant une troisième phase de fonctionnement du cycle de fonctionnement, les plaques conductrices des premier, deuxième, troisième et quatrième ensembles sont maintenues dans une troisième configuration dans laquelle les plaques conductrices du premier ensemble sont connectées à la borne négative de la source d'alimentation électrique, les plaques conductrices du deuxième ensemble sont isolées de la source d'alimentation électrique, les plaques conductrices du troisième ensemble sont connectées à la borne positive de la source d'alimentation électrique, et les plaques conductrices du quatrième ensemble sont isolées de la source d'alimentation électrique, et
- pendant une quatrième phase de fonctionnement du cycle de fonctionnement, les plaques conductrices des premier, deuxième, troisième et quatrième ensembles sont maintenues dans une quatrième configuration dans laquelle les plaques conductrices du premier ensemble sont isolées de la source d'alimentation électrique, les plaques conductrices du deuxième ensemble sont connectées à la borne positive de la source d'alimentation électrique, les plaques conductrices du troisième ensemble sont isolées de la source d'alimentation électrique, et les plaques conductrices du quatrième ensemble sont connectées à la borne négative de la source d'alimentation électrique.

Avantageusement, les première, deuxième, troisième et quatrième phases de fonctionnement présentent des durées de fonctionnement sensiblement identiques.

Selon un mode de réalisation de l'invention, le cycle de fonctionnement comporte une répétition des première, deuxième, troisième et quatrième phases de fonctionnement.

Selon un mode de réalisation de l'invention, la source d'alimentation électrique est une source de tension ou une source de courant. La source d'alimentation électrique peut par exemple être un générateur de courant ou un générateur de tension, ou encore une batterie électrique.

Selon un mode de réalisation de l'invention, chacun des premier, deuxième et troisième ensembles comporte un nombre pair de plaques conductrices.

Selon un mode de réalisation de l'invention, chacun des premier, deuxième, troisième et quatrième ensembles comporte un nombre pair de plaques conductrices. Chacun des premier, deuxième, troisième et quatrième ensembles peut par exemple comporte entre quatre et douze plaques conductrices, et par exemple huit plaques conductrices.

Selon un mode de réalisation de l'invention, chaque plaque conductrice comporte une âme en titane et une couche de revêtement recouvrant l'âme respective.

Selon un mode de réalisation de l'invention, la couche de revêtement de chaque plaque conductrice est en ruthénium.

Selon un mode de réalisation de l'invention, chaque plaque conductrice s'étend sensiblement parallèlement à l'axe longitudinal du récipient.

Selon un mode de réalisation de l'invention, le récipient est de forme globalement cylindrique.

Selon un mode de réalisation de l'invention, la sortie de liquide est située à l'opposé de l'entrée de liquide.

Selon un mode de réalisation de l'invention, la cellule d'électrolyse comporte un support disposé dans la chambre d'électrolyse, le support comportant une première portion d'extrémité tournée vers l'entrée de liquide, une deuxième portion d'extrémité tournée vers la sortie de liquide et une portion intermédiaire située entre les première et deuxième portions d'extrémité, les plaques conductrices des premier, deuxième et troisième ensembles, et le cas échéant également du quatrième ensemble, étant fixées à la portion intermédiaire du support.

Selon un mode de réalisation de l'invention, le support est en matériau électriquement isolant.

Selon un mode de réalisation de l'invention, la première portion d'extrémité présente une section transversale qui diminue en direction d'une extrémité du support tournée vers l'entrée de liquide. Ces dispositions permettent de répartir de manière plus homogène le flux de liquide le long des différentes plaques conductrices.

Selon un mode de réalisation de l'invention, la première portion d'extrémité présente une forme générale d'ogive. Ces dispositions permettent de répartir de manière encore plus homogène le flux de liquide le long des différentes plaques conductrices

Selon un mode de réalisation de l'invention, la deuxième portion d'extrémité présente une section transversale qui diminue en direction d'une extrémité du support tournée vers la sortie de liquide. Avantageusement, la deuxième portion d'extrémité présente une forme générale d'ogive.

Selon un mode de réalisation de l'invention, chaque plaque conductrice présente une longueur axiale inférieure à la longueur axiale du support.

Selon un mode de réalisation de l'invention, le récipient est un récipient ouvert.

Selon un mode de réalisation de l'invention, la cellule d'électrolyse comporte en outre une source de chlorure reliée fluidiquement à l'entrée de liquide du récipient. La source de chlorure est par exemple configurée pour alimenter le récipient avec une solution aqueuse contenant du chlorure, telle que du chlorure de sodium.

Selon un mode de réalisation de l'invention, la cellule d'électrolyse est une cellule d'électrolyse pour un traitement électrolytique d'eau provenant d'un bassin, tel qu'une piscine.

Selon un mode de réalisation de l'invention, le récipient est en matériau transparent ou translucide.

Selon un mode de réalisation de l'invention, les plaques conductrices des différents ensembles de plaques sont espacées les unes des autres.

Selon un mode de réalisation de l'invention, les plaques conductrices d'un même ensemble de plaques sont reliées électriquement entre elles.

Selon un mode de réalisation de l'invention, la cellule d'électrolyse comprend une pluralité de pistes électriquement conductrices s'étendant autour des différentes plaques conductrices et autour l'axe longitudinal du récipient, chacune des pistes électriquement conductrices reliant les plaques conductrices d'un même ensemble de plaques entre elles.

Selon le mode de réalisation représenté sur les figures, la cellule d'électrolyse comprend une pluralité d'éléments de connexion qui font saillie du récipient, chaque élément de connexion étant relié électriquement à l'une des pistes électriquement conductrices.

Selon un mode de réalisation de l'invention, les plaques conductrices d'un même ensemble de plaques sont isolées électriquement des plaques conductrices des autres ensembles de plaques.

La présente invention concerne en outre un procédé de traitement électrolytique d'un liquide avec une cellule d'électrolyse, le procédé de traitement comprenant les étapes suivantes :
- fourniture d'un récipient délimitant une chambre d'électrolyse et comportant une entrée de liquide et une sortie de liquide qui sont reliées fluidiquement à la chambre d'électrolyse, le récipient comportant un axe longitudinal qui est sensiblement parallèle à une direction d'écoulement du liquide à traiter à travers la chambre d'électrolyse, le récipient contenant un premier ensemble de plaques conductrices, un deuxième ensemble de plaques conductrices, un troisième ensemble de plaques conductrices et un quatrième ensemble de plaques conductrices qui sont disposées dans la chambre d'électrolyse et qui sont destinées à être au moins partiellement immergées dans le liquide à traiter, chaque plaque conductrice du deuxième ensemble étant disposée entre une plaque conductrice du premier ensemble et une plaque conductrice du troisième ensemble, chaque plaque conductrice du quatrième ensemble étant disposée entre une plaque conductrice du troisième ensemble et une plaque conductrice du premier ensemble, les plaques conductrices des premier, deuxième, troisième et quatrième ensembles étant électriquement conductrices et s'étendant radialement par rapport à l'axe longitudinal du récipient,
- fourniture d'une source d'alimentation électrique comportant une borne positive et une borne négative auxquelles chaque plaque conductrice des premier, deuxième et troisième ensembles est apte à être connectée électriquement, la source d'alimentation électrique étant configurée pour alimenter électriquement les plaques conductrices des premier, deuxième et troisième ensembles,
- fourniture d'un dispositif de commutation configuré pour interrompre l'alimentation électrique des plaques conductrices des premier, deuxième et troisième ensembles et pour modifier la connexion électrique entre les plaques conductrices des premier, deuxième, troisième et quatrième ensembles et les bornes positive et négative de la source d'alimentation électrique de manière à changer la polarité des plaques conductrices des premier, deuxième, troisième et quatrième ensembles, et
- contrôle du dispositif de commutation selon un cycle de fonctionnement durant lequel chaque plaque conductrice des premier, deuxième, troisième et quatrième ensembles passe par plusieurs états successifs selon une séquence prédéterminée comportant un état connecté dans lequel ladite plaque conductrice est à une première polarité, un état non connecté dans lequel ladite plaque conductrice est isolée électriquement de la source d'alimentation électrique, un état connecté dans lequel ladite plaque conductrice est à une deuxième polarité opposée à la première polarité et un état non connecté dans lequel ladite plaque conductrice est isolée électriquement de la source d'alimentation électrique, l'étape de contrôle consistant à contrôler le dispositif de commutation de telle sorte que, pendant au moins une phase de fonctionnement dudit cycle de fonctionnement, les plaques conductrices de l'un des premier, deuxième, troisième et quatrième ensembles sont connectées électriquement à la borne positive de la source d'alimentation électrique, les plaques conductrices de l'un des premier, deuxième, troisième et quatrième ensembles sont connectées électriquement à la borne négative de la source d'alimentation électrique et les plaques conductrices des autres des des premier, euxième, troisième et quatrième ensembles sont isolées électriquement de la source d'alimentation électrique, chaque plaque conductrice isolée électriquement de la source d'alimentation électrique étant disposée entre une plaque conductrice connectée électriquement à la borne négative de la source d'alimentation électrique et une plaque conductrice connectée électriquement à la borne positive de la source d'alimentation électrique.

De toute façon l'invention sera bien comprise à l'aide de la description qui suit en référence aux dessins schématiques annexés représentant, à titre d'exemple non limitatif, une forme d'exécution de cette cellule d'électrolyse.
Figure 1 est une vue schématique d'une cellule d'électrolyse selon l'invention.
Figure 2 est une vue partielle en perspective de la cellule d'électrolyse de la figure 1.
Figure 3 est une vue partielle avant de la cellule d'électrolyse de la figure 1.
Figure 4 est une vue partielle de côté de la cellule d'électrolyse de la figure 1.
Figure 5 est un diagramme représentant la variation en fonction du temps de la polarité de plaques conductrices de différents ensembles de plaques de la cellule d'électrolyse de la figure 1.

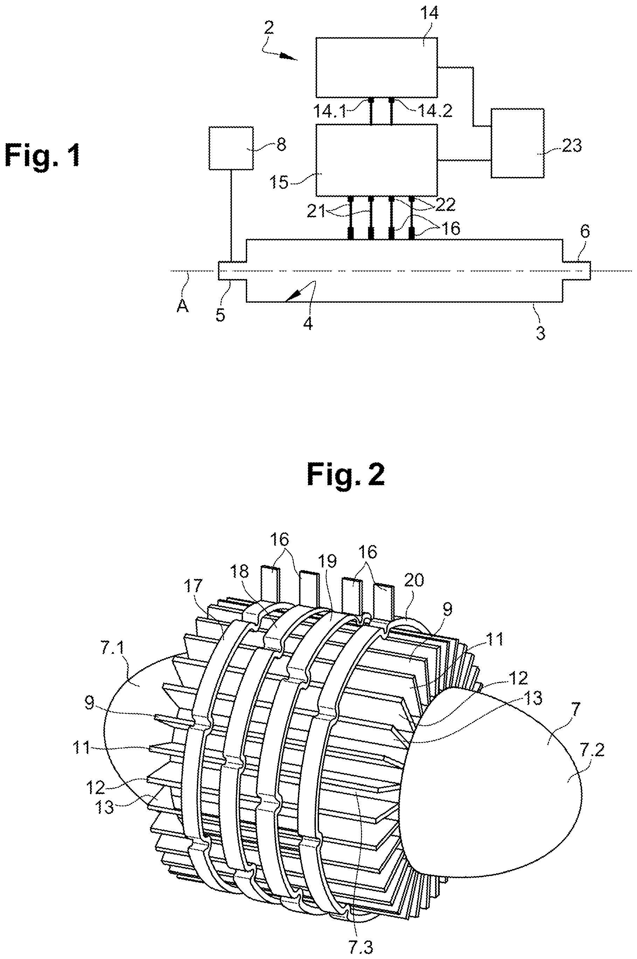

Les figures 1 à 4 représentent une cellule d'électrolyse 2 pour un traitement électrolytique d'un liquide, tel que l'eau d'un bassin, et par exemple d'une piscine. La cellule d'électrolyse 2 est plus particulièrement configurée pour un traitement par chloration de l'eau d'un bassin.

La cellule d'électrolyse 2 comprend un récipient 3, également nommé boîtier, délimitant une chambre d'électrolyse 4 et comportant une entrée de liquide 5 et une sortie de liquide 6 qui sont reliées fluidiquement à la chambre d'électrolyse 4.

Le récipient 3 comporte un axe longitudinal A qui est sensiblement parallèle à une direction d'écoulement du liquide à traiter à travers la chambre d'électrolyse 4.

Selon le mode de réalisation représenté sur les figures, le récipient 3 est de forme globalement cylindrique, et l'entrée de liquide 5 et la sortie de liquide 6 sont disposées à l'opposé l'une de l'autre. Le récipient 3 peut par exemple être en matériau transparent ou translucide.

La cellule d'électrolyse 2 comprend également un support 7 disposé dans la chambre d'électrolyse 4. Le support 7 est avantageusement en matériau électriquement isolant. Le support 7 comporte une première portion d'extrémité 7.1 tournée vers l'entrée de liquide 5, une deuxième portion d'extrémité 7.2 tournée vers la sortie de liquide 6 et une portion intermédiaire 7.3 située entre les première et deuxième portions d'extrémité 7.1, 7.2.

Avantageusement, la première portion d'extrémité 7.1 présente une section transversale qui diminue en direction d'une extrémité du support 7 tournée vers l'entrée de liquide 5, et la deuxième portion d'extrémité 7.2 présente une section transversale qui diminue en direction d'une extrémité du support 7 tournée vers la sortie de liquide 6. Selon le mode de réalisation représenté sur les figures, les première et deuxième portions d'extrémité 7.1, 7.2 présentent chacune une forme générale d'ogive.

La cellule d'électrolyse 2 comporte en outre une source de chlorure 8 reliée fluidiquement à l'entrée de liquide 5 du récipient 3. La source de chlorure 8 est par exemple configurée pour alimenter le récipient 3 avec une solution aqueuse contenant du chlorure, telle que du chlorure de sodium.

La cellule d'électrolyse 2 comprend de plus un premier ensemble de plaques conductrices 9, un deuxième ensemble de plaques conductrices 11, un troisième ensemble de plaques conductrices 12 et un quatrième ensemble de plaques conductrices 13 disposées dans la chambre d'électrolyse 4 et destinées à être au moins partiellement immergées dans le liquide à traiter. Selon le mode de réalisation représenté sur les figures, chaque plaque conductrice des premier, deuxième, troisième et quatrième ensembles présente une longueur axiale inférieure à la longueur axiale du support 7, et par exemple de la portion intermédiaire 7.3.

Les plaques conductrices 9, 11, 12, 13 des premier, deuxième, troisième et quatrième ensembles sont fixées à la portion intermédiaire 7.3 du support 7 et s'étendent radialement par rapport à l'axe longitudinal A du récipient 3. Les plaques conductrices 9, 11, 12, 13 des premier, deuxième, troisième et quatrième ensembles sont électriquement conductrices, et les plaques conductrices d'un même ensemble sont reliées électriquement entre elles. Avantageusement, les plaques conductrices 9, 11, 12, 13 des premier, deuxième, troisième et quatrième ensembles sont espacées les unes des autres.

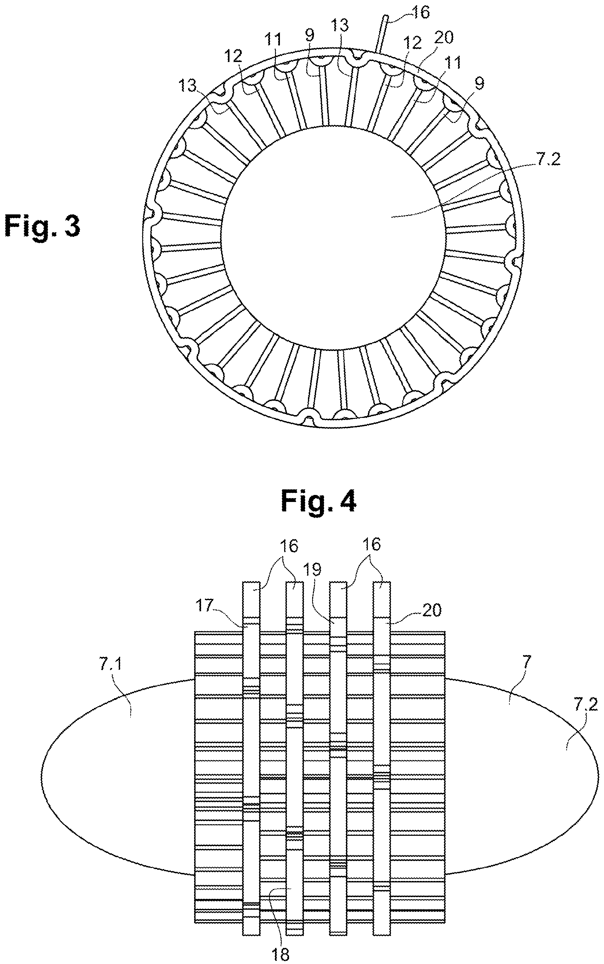

Comme montré plus particulièrement sur les figures 2 et 3, chaque plaque conductrice 11 du deuxième ensemble est disposée entre une plaque conductrice 9 du premier ensemble et une plaque conductrice 12 du troisième ensemble, et chaque plaque conductrice 13 du quatrième ensemble est disposée entre une plaque conductrice 12 du troisième ensemble et une plaque conductrice 9 du premier ensemble.

De façon avantageuse, les différentes plaques conductrices 9, 11, 12, 13 sont régulièrement réparties autour de l'axe longitudinal A du récipient. Selon un mode de réalisation de l'invention, chaque plaque conductrice 9, 11, 12, 13 des premier, deuxième, troisième et quatrième ensembles comporte une âme en titane et une couche de revêtement, par exemple en ruthénium, recouvrant l'âme respective.

La cellule d'électrolyse 2 comprend en outre une source d'alimentation électrique 14 comportant une borne positive 14.1 et une borne négative 14.2 auxquelles chaque plaque conductrice des premier, deuxième, troisième et quatrième ensembles est apte à être connectée électriquement. La source d'alimentation électrique 14 est ainsi configurée pour alimenter électriquement les plaques conductrices des premier, deuxième, troisième et quatrième ensembles.

La cellule d'électrolyse 2 comprend de plus un dispositif de commutation 15 relié électriquement à la source d'alimentation électrique 14 et configuré d'une part pour interrompre l'alimentation électrique des plaques conductrices 9, 11, 12, 13 des premier, deuxième, troisième et quatrième ensembles et d'autre part pour modifier la connexion électrique entre les plaques conductrices 9, 11, 12, 13 des premier, deuxième, troisième et quatrième ensembles et les bornes positive et négative 14.1, 14.2 de la source d'alimentation électrique 14 de manière à changer la polarité des plaques conductrices des premier, deuxième, troisième et quatrième ensembles au cours du fonctionnement de la cellule d'électrolyse 2.

Selon le mode de réalisation représenté sur les figures, la cellule d'électrolyse 2 comprend quatre éléments de connexion 16, tels que des broches de connexion ou des pattes de connexion, qui font saillie du récipient 3 et qui sont chacun reliés électriquement aux plaques conductrices de l'un respectif des premier, deuxième, troisième et quatrième ensembles par l'intermédiaire de pistes électriquement conductrices 17, 18, 19, 20 s'étendant autour des différentes plaques conductrices, et quatre fils de connexion 21 qui sont chacun reliés électriquement d'une part à une borne de sortie 22 respective du dispositif de commutation 15 et d'autre part à un élément de connexion 16 respectif.

La cellule d'électrolyse 2 comprend également une unité de commande 23 qui est par exemple équipée d'un microprocesseur. L'unité de commande 23 est configurée pour contrôler le dispositif de commutation 15 selon un cycle de fonctionnement durant lequel chaque plaque conductrice 9, 11, 12, 13 des premier, deuxième, troisième et quatrième ensembles passe par plusieurs états successifs selon une séquence prédéterminée comportant un état connecté dans lequel ladite plaque conductrice est à une première polarité, un état non connecté dans lequel ladite plaque conductrice est isolée électriquement de la source d'alimentation électrique 14, un état connecté dans lequel ladite plaque conductrice est à une deuxième polarité opposée à la première polarité et un état non connecté dans lequel ladite plaque conductrice est de nouveau isolée électriquement de la source d'alimentation électrique 14.

L'unité de commande 23 est plus particulièrement configurée pour contrôler le dispositif de commutation 15 de telle sorte que, pendant chaque phase de fonctionnement dudit cycle de fonctionnement, les plaques conductrices de l'un des premier, deuxième, troisième et quatrième ensembles sont connectées électriquement à la borne positive 14.1 de la source d'alimentation électrique 14, les plaques conductrices de l'un des premier, deuxième, troisième et quatrième ensembles sont connectées électriquement à la borne négative 14.2 de la source d'alimentation électrique 14 et les plaques conductrices des deux autres ensembles sont isolées électriquement de la source d'alimentation électrique 14. Au cours de chaque phase de fonctionnement du cycle de fonctionnement, chaque plaque conductrice qui est isolée électriquement de la source d'alimentation électrique 14 est disposée entre une plaque conductrice connectée électriquement à la borne négative 14.2 de la source d'alimentation électrique 14 et une plaque conductrice connectée électriquement à la borne positive 14.1 de la source d'alimentation électrique 14.

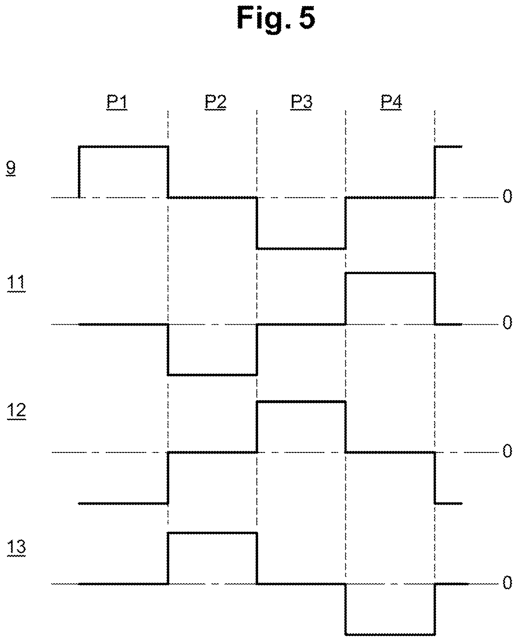

Selon un mode de réalisation de l'invention représenté à la figure 5, l'unité de commande 23 est configurée pour contrôler le dispositif de commutation 14 de telle sorte que le cycle de fonctionnement précité comporte :
- une première phase de fonctionnement P1 durant laquelle le dispositif de commutation 15 connecte les plaques conductrices 9 du premier ensemble à la borne positive 14.1 de la source d'alimentation électrique 14, isole les plaques conductrices 11 du deuxième ensemble de la source d'alimentation électrique 14, connecte les plaques conductrices 12 du troisième ensemble à la borne négative 14.2 de la source d'alimentation électrique 14, et isole les plaques conductrices 13 du quatrième ensemble de la source d'alimentation électrique 14,
- une deuxième phase de fonctionnement P2 durant laquelle le dispositif de commutation 15 isole les plaques conductrices 9 du premier ensemble de la source d'alimentation électrique 14, connecte les plaques conductrices 11 du deuxième ensemble à la borne négative 14.2 de la source d'alimentation électrique 14, isole les plaques conductrices 12 du troisième ensemble de la source d'alimentation électrique 14, et connecte les plaques conductrices 13 du quatrième ensemble à la borne positive 14.1 de la source d'alimentation électrique 14,
- une troisième phase de fonctionnement P3 durant laquelle le dispositif de commutation 15 connecte les plaques conductrices 9 du premier ensemble à la borne négative 14.2 de la source d'alimentation électrique 14, isole les plaques conductrices 11 du deuxième ensemble de la source d'alimentation électrique 14, connecte les plaques conductrices 12 du troisième ensemble à la borne positive 14.1 de la source d'alimentation électrique 14, et isole les plaques conductrices 13 du quatrième ensemble de la source d'alimentation électrique 14, et
- une quatrième phase de fonctionnement P4 durant laquelle le dispositif de commutation 15 isole les plaques conductrices 9 du premier ensemble de la source d'alimentation électrique 14, connecte les plaques conductrices 11 du deuxième ensemble à la borne positive 14.2 de la source d'alimentation électrique 14, isole les plaques conductrices 12 du troisième ensemble de la source d'alimentation électrique 14, et connecte les plaques conductrices 13 du quatrième ensemble à la borne négative 14.2 de la source d'alimentation électrique 14.

De façon avantageuse, le cycle de fonctionnement comporte une répétition des première, deuxième, troisième et quatrième phases de fonctionnement P1 à P4 précitées.

Une telle configuration de la cellule d'électrolyse 2, et en particulier le fait que pendant chaque phase de fonctionnement du cycle de fonctionnement, les plaques conductrices de l'un des ensembles de plaques sont connectées électriquement à la borne positive 14.1 de la source d'alimentation électrique 14, les plaques conductrices de l'un des ensembles de plaques sont connectées électriquement à la borne négative 14.2 de la source d'alimentation électrique et les plaques conductrices des deux autres ensembles de plaques sont isolées électriquement de la source d'alimentation électrique 14, permet de répartir l'usure de la cellule d'électrolyse sur toute les plaques conductrices, et non plus uniquement sur les électrodes comme c'est le cas pour les cellules d'électrolyse de l'art antérieur. Ainsi, la configuration de la cellule d'électrolyse 2 selon la présente invention diminue la fréquence de maintenance ou de remplacement de la cellule d'électrolyse, ce qui est très avantageux notamment dus aux coûts de fabrication élevés des plaques conductrices.

En outre, la disposition radiale des différentes plaques conductrices augmente sensiblement les surfaces utiles de chaque plaque conductrice, c'est-à-dire les surfaces de chaque plaque conductrice qui participe à l'électrolyse, ce qui permet soit de diminuer la taille des plaques conductrices et donc les coûts de fabrication de la cellule d'électrolyse 2, soit d'augmenter les performances de la cellule d'électrolyse.

Comme il va de soi, l'invention ne se limite pas à la seule forme d'exécution de cette cellule d'électrolyse, décrite ci-dessus à titre d'exemple. L'étendu de l'invention est définit par les revendications si dessous.

## Revendications

1. Cellule d'électrolyse (2) pour un traitement électrolytique d'un liquide, comprenant au moins :
- un récipient (3) délimitant une chambre d'électrolyse (4) et comportant une entrée de liquide (5) et une sortie de liquide (6) qui sont reliées fluidiquement à la chambre d'électrolyse (4), le récipient (3) comportant un axe longitudinal (A),
- un premier ensemble de plaques conductrices (9), un deuxième ensemble de plaques conductrices (11), un troisième ensemble de plaques conductrices (12) et un quatrième ensemble de plaques conductrices (13) qui sont disposées dans la chambre d'électrolyse (4) et qui sont destinées à être au moins partiellement immergées dans le liquide à traiter, chaque plaque conductrice (11) du deuxième ensemble étant disposée entre une plaque conductrice (9) du premier ensemble et une plaque conductrice (12) du troisième ensemble, chaque plaque conductrice (13) du quatrième ensemble étant disposée entre une plaque conductrice (12) du troisième ensemble et une plaque conductrice (9) du premier ensemble, les plaques conductrices (9, 11, 12, 13) des premier, deuxième, troisième et quatrième ensembles étant électriquement conductrices et s'étendant radialement par rapport à l'axe longitudinal (A) du récipient (3),
- une source d'alimentation électrique (14) comportant une borne positive (14.1) et une borne négative (14.2) auxquelles chaque plaque conductrice (9, 11, 12) des premier, deuxième, troisième et quatrième ensembles est apte à être connectée électriquement, la source d'alimentation électrique (14) étant configurée pour alimenter électriquement les plaques conductrices des premier, deuxième, troisième et quatrième ensembles,
- un dispositif de commutation (15) configuré pour interrompre l'alimentation électrique des plaques conductrices des premier, deuxième, troisième et quatrième ensembles et pour modifier la connexion électrique entre les plaques conductrices des premier, deuxième, troisième et quatrième ensembles et les bornes positive et négative (14.1, 14.2) de la source d'alimentation électrique (14) de manière à changer la polarité des plaques conductrices des premier, deuxième, troisième et quatrième ensembles, et
- une unité de commande (23) configurée pour contrôler le dispositif de commutation (15) selon un cycle de fonctionnement durant lequel chaque plaque conductrice des premier, deuxième, troisième et quatrième ensembles passe par plusieurs états successifs selon une séquence prédéterminée comportant un état connecté dans lequel ladite plaque conductrice est à une première polarité, un état non connecté dans lequel ladite plaque conductrice est isolée électriquement de la source d'alimentation électrique (14), un état connecté dans lequel ladite plaque conductrice est à une deuxième polarité opposée à la première polarité et un état non connecté dans lequel ladite plaque conductrice est isolée électriquement de la source d'alimentation électrique (14),
l'unité de commande (23) étant configurée pour contrôler le dispositif de commutation (15) de telle sorte que, pendant au moins une phase de fonctionnement dudit cycle de fonctionnement, les plaques conductrices de l'un des premier, deuxième, troisième et quatrième ensembles sont connectées électriquement à la borne positive (14.1) de la source d'alimentation électrique (14), les plaques conductrices de l'un des premier, deuxième, troisième et quatrième ensembles sont connectées électriquement à la borne négative (14.2) de la source d'alimentation électrique (14) et les plaques conductrices des autres des premier, deuxième, troisième et quatrième ensembles sont isolées électriquement de la source d'alimentation électrique (14), chaque plaque conductrice isolée électriquement de la source d'alimentation électrique (14) étant disposée entre une plaque conductrice connectée électriquement à la borne négative (14.2) de la source d'alimentation électrique (14) et une plaque conductrice connectée électriquement à la borne positive (14.1) de la source d'alimentation électrique (14).

2. Cellule d'électrolyse (2) selon la revendication 1, dans laquelle l'unité de commande (23) est configurée pour contrôler le dispositif de commutation (15) de telle sorte que, durant chaque phase de fonctionnement dudit cycle de fonctionnement, les plaques conductrices de l'un des premier, deuxième, troisième et quatrième ensembles sont connectées électriquement à la borne positive (14.1) de la source d'alimentation électrique (14), les plaques conductrices de l'un des premier, deuxième, troisième et quatrième ensembles sont connectées électriquement à la borne négative (14.2) de la source d'alimentation électrique (14) et les plaques conductrices des autre des premier, deuxième, troisième et quatrième ensembles sont isolées électriquement de la source d'alimentation électrique (14).

3. Cellule d'électrolyse (2) selon la revendication 1 ou 2, dans laquelle le cycle de fonctionnement comporte une pluralité de phases de fonctionnement successives qui présentent des durées de fonctionnement sensiblement identiques.

4. Cellule d'électrolyse (2) selon l'une quelconque des revendications 1 à 3, dans laquelle l'unité de commande (23) est configurée pour contrôler le dispositif de commutation (15) de telle sorte que le cycle de fonctionnement comporte :
- une première phase de fonctionnement (P1) durant laquelle le dispositif de commutation (15) connecte les plaques conductrices (9) du premier ensemble à la borne positive (14.1) de la source d'alimentation électrique (14), isole les plaques conductrices (11) du deuxième ensemble de la source d'alimentation électrique (14), connecte les plaques conductrices (12) du troisième ensemble à la borne négative (14.2) de la source d'alimentation électrique (14), et isole les plaques conductrices (13) du quatrième ensemble de la source d'alimentation électrique (14),
- une deuxième phase de fonctionnement (P2) durant laquelle le dispositif de commutation (15) isole les plaques conductrices (9) du premier ensemble de la source d'alimentation électrique (14), connecte les plaques conductrices (11) du deuxième ensemble à la borne négative (14.2) de la source d'alimentation électrique (14), isole les plaques conductrices (12) du troisième ensemble de la source d'alimentation électrique (14), et connecte les plaques conductrices (13) du quatrième ensemble à la borne positive (14.1) de la source d'alimentation électrique (14),
- une troisième phase de fonctionnement (P3) durant laquelle le dispositif de commutation (15) connecte les plaques conductrices (9) du premier ensemble à la borne négative (14.2) de la source d'alimentation électrique (14), isole les plaques conductrices (11) du deuxième ensemble de la source d'alimentation électrique (14), connecte les plaques conductrices (12) du troisième ensemble à la borne positive (14.1) de la source d'alimentation électrique (14), et isole les plaques conductrices (13) du quatrième ensemble de la source d'alimentation électrique (14), et
- une quatrième phase de fonctionnement (P4) durant laquelle le dispositif de commutation (15) isole les plaques conductrices (9) du premier ensemble de la source d'alimentation électrique (14), connecte les plaques conductrices (11) du deuxième ensemble à la borne positive (14.1) de la source d'alimentation électrique (14), isole les plaques conductrices (12) du troisième ensemble de la source d'alimentation électrique (14), et connecte les plaques conductrices (13) du quatrième ensemble à la borne négative (14.2) de la source d'alimentation électrique (14).

5. Cellule d'électrolyse (2) selon la revendication 4, dans laquelle le cycle de fonctionnement comporte une répétition des première, deuxième, troisième et quatrième phases de fonctionnement.

6. Cellule d'électrolyse (2) selon l'une quelconque des revendications 1 à 5, dans laquelle la source d'alimentation électrique est un générateur électrique.

7. Cellule d'électrolyse (2) selon l'une quelconque des revendications 1 à 6, dans laquelle chacun des premier, deuxième et troisième ensembles comporte un nombre pair de plaques conductrices.

8. Cellule d'électrolyse (2) selon l'une quelconque des revendications 1 à 7, dans laquelle chaque plaque conductrice comporte une âme en titane et une couche de revêtement recouvrant l'âme respective.

9. Cellule d'électrolyse (2) selon l'une quelconque des revendications 1 à 8, laquelle comporte un support (7) disposé dans la chambre d'électrolyse (4), le support (7) comportant une première portion d'extrémité (7.1) tournée vers l'entrée de liquide (5), une deuxième portion d'extrémité (7.2) tournée vers la sortie de liquide (6) et une portion intermédiaire (7.1) située entre les première et deuxième portions d'extrémité (7.1, 7.2), les plaques conductrices des premier, deuxième, troisième et quatrième ensembles étant fixées à la portion intermédiaire (7.1) du support (7).

10. Cellule d'électrolyse (2) selon la revendication 9, dans laquelle la première portion d'extrémité (7.1) présente une section transversale qui diminue en direction d'une extrémité du support (7) tournée vers l'entrée de liquide (5).

11. Cellule d'électrolyse (2) selon la revendication 9 ou 10, dans laquelle la première portion d'extrémité (7.1) présente une forme générale d'ogive.

12. Cellule d'électrolyse (2) selon l'une quelconque des revendications 1 à 11, laquelle comporte en outre une source de chlorure (8) reliée fluidiquement à l'entrée de liquide (5) du récipient (3).

13. Procédé de traitement électrolytique d'un liquide avec une cellule d'électrolyse (2), le procédé de traitement comprenant les étapes suivantes :
- fourniture d'un récipient délimitant une chambre d'électrolyse et comportant une entrée de liquide et une sortie de liquide qui sont reliées fluidiquement à la chambre d'électrolyse, le récipient comportant un axe longitudinal qui est sensiblement parallèle à une direction d'écoulement du liquide à traiter à travers la chambre d'électrolyse, le récipient contenant un premier ensemble de plaques conductrices, un deuxième ensemble de plaques conductrices, un troisième ensemble de plaques conductrices et un quatrième ensemble de plaques conductrices disposées dans la chambre d'électrolyse et destinées à être au moins partiellement immergées dans le liquide à traiter, chaque plaque conductrice du deuxième ensemble étant disposée entre une plaque conductrice du premier ensemble et une plaque conductrice du troisième ensemble, chaque plaque conductrice du quatrième ensemble étant disposée entre une plaque conductrice du troisième ensemble et une plaque conductrice du premier ensemble, les plaques conductrices des premier, deuxième, troisième et quatrième ensembles étant électriquement conductrices et s'étendant radialement par rapport à l'axe longitudinal du récipient,
- fourniture d'une source d'alimentation électrique comportant une borne positive et une borne négative auxquelles chaque plaque conductrice des premier, deuxième, troisième et quatrième ensembles est apte à être connectée électriquement, la source d'alimentation électrique étant configurée pour alimenter électriquement les plaques conductrices des premier, deuxième, troisième et quatrième ensembles,
- fourniture d'un dispositif de commutation configuré pour interrompre l'alimentation électrique des plaques conductrices des premier, deuxième, troisième et quatrième ensembles et pour modifier la connexion électrique entre les plaques conductrices des premier, deuxième, troisième et quatrième ensembles et les bornes positive et négative de la source d'alimentation électrique de manière à changer la polarité des plaques conductrices des premier, deuxième, troisième et quatrième ensembles, et
- contrôle du dispositif de commutation selon un cycle de fonctionnement durant lequel chaque plaque conductrice des premier, deuxième, troisième et quatrième ensembles passe par plusieurs états successifs selon une séquence prédéterminée comportant un état connecté dans lequel ladite plaque conductrice est à une première polarité, un état non connecté dans lequel ladite plaque conductrice est isolée électriquement de la source d'alimentation électrique, un état connecté dans lequel ladite plaque conductrice est à une deuxième polarité opposée à la première polarité et un état non connecté dans lequel ladite plaque conductrice est isolée électriquement de la source d'alimentation électrique,
l'étape de contrôle consistant à contrôler le dispositif de commutation de telle sorte que, pendant au moins une phase de fonctionnement dudit cycle de fonctionnement, les plaques conductrices de l'un des premier, deuxième, troisième et quatrième ensembles sont connectées électriquement à la borne positive de la source d'alimentation électrique, les plaques conductrices de l'un des premier, deuxième, troisième et quatrième ensembles sont connectées électriquement à la borne négative de la source d'alimentation électrique et les plaques conductrices des autre des premier, deuxième, troisième et quatrième ensembles sont isolées électriquement de la source d'alimentation électrique, chaque plaque conductrice isolée électriquement de la source d'alimentation électrique étant disposée entre une plaque conductrice connectée électriquement à la borne négative de la source d'alimentation électrique et une plaque conductrice connectée électriquement à la borne positive de la source d'alimentation électrique.

## Patentansprüche

1. Elektrolysezelle (2) für eine elektrolytische Behandlung einer Flüssigkeit, die mindestens Folgendes enthält:
- einen Behälter (3), der eine Elektrolysekammer (4) begrenzt und einen Flüssigkeitseinlass (5) und einen Flüssigkeitsauslass (6) umfasst, die fluidisch mit der Elektrolysekammer (4) verbunden sind, wobei der Behälter (3) eine Längsachse (A) umfasst,
- einen ersten Satz leitender Platten (9), einen zweiten Satz leitender Platten (11), einen dritten Satz leitender Platten (12) und einen vierten Satz leitender Platten (13), die in der Elektrolysekammer (4) angeordnet und dazu bestimmt sind, mindestens teilweise in die zu behandelnde Flüssigkeit eingetaucht zu werden, wobei jede leitende Platte (11) des zweiten Satzes zwischen einer leitenden Platte (9) des ersten Satzes und einer leitenden Platte (12) des dritten Satzes angeordnet ist, wobei jede leitende Platte (13) des vierten Satzes zwischen einer leitenden Platte (12) des dritten Satzes und einer leitenden Platte (9) des ersten Satzes angeordnet ist, wobei die leitenden Platten (9, 11, 12, 13) des ersten, des zweiten, des dritten und des vierten Satzes elektrisch leitend sind und sich in Bezug auf die Längsachse (A) des Behälters (3) radial erstrecken,
- eine Stromversorgungsquelle (14), die einen positiven Anschluss (14.1) und einen negativen Anschluss (14.2) umfasst, mit denen jede leitende Platte (9, 11, 12) des ersten, des zweiten, des dritten und des vierten Satzes elektrisch verbunden werden kann, wobei die Stromversorgungsquelle (14) dazu konfiguriert ist, die leitenden Platten des ersten, des zweiten, des dritten und des vierten Satzes mit Strom zu versorgen,
- eine Schaltvorrichtung (15), die dazu konfiguriert ist, die Stromversorgung der leitenden Platten des ersten, des zweiten, des dritten und des vierten Satzes zu unterbrechen und die elektrische Verbindung zwischen den leitenden Platten des ersten, des zweiten, des dritten und des vierten Satzes und dem positiven und dem negativen Anschluss (14.1, 14.2) der Stromversorgungsquelle (14) zu modifizieren, um die Polarität der leitenden Platten des ersten, des zweiten, des dritten und des vierten Satzes zu ändern, und
- eine Steuereinheit (23), die dazu konfiguriert ist, die Schaltvorrichtung (15) gemäß einem Betriebszyklus zu steuern, in dem jede leitende Platte des ersten, des zweiten, des dritten und des vierten Satzes mehrere aufeinanderfolgende Zustände gemäß einer vorbestimmten Reihenfolge durchläuft, die einen verbundenen Zustand, in dem die leitende Platte eine erste Polarität hat, einen nicht verbundenen Zustand, in dem die leitende Platte elektrisch von der Stromversorgungsquelle (14) isoliert ist, einen verbundenen Zustand, in dem die leitende Platte eine zweite Polarität hat, die der ersten Polarität entgegengesetzt ist, und einen nicht verbundenen Zustand umfasst, in dem die leitende Platte elektrisch von der Stromversorgungsquelle (14) isoliert ist,
wobei die Steuereinheit (23) dazu konfiguriert ist, die Schaltvorrichtung (15) derart zu steuern, dass während mindestens einer Betriebsphase des Betriebszyklus die leitenden Platten eines des ersten, des zweiten, des dritten und des vierten Satzes elektrisch mit dem positiven Anschluss (14.1) der Stromversorgungsquelle (14) verbunden sind, die leitenden Platten des ersten, des zweiten, des dritten und des vierten Satzes elektrisch mit dem negativen Anschluss (14.2) der Stromversorgungsquelle (14) verbunden ist und die leitenden Platten der anderen des ersten, des zweiten, des dritten und des vierten Satzes elektrisch von der Stromversorgungsquelle (14) isoliert sind, wobei jede leitende Platte, die elektrisch von der Stromversorgungsquelle (14) isoliert ist, zwischen einer leitenden Platte, die elektrisch mit dem negativen Anschluss (14.2) der Stromversorgungsquelle (14) verbunden ist, und einer leitenden Platte, die elektrisch mit dem positiven Anschluss (14.1) der Stromversorgungsquelle (14) verbunden ist, angeordnet ist.

2. Elektrolysezelle (2) nach Anspruch 1, wobei die Steuereinheit (23) dazu konfiguriert ist, die Schaltvorrichtung (15) derart zu steuern, dass während jeder Betriebsphase des Betriebszyklus die leitenden Platten eines des ersten, des zweiten, des dritten und des vierten Satzes elektrisch mit dem positiven Anschluss (14.1) der Stromversorgungsquelle (14) verbunden sind, die leitenden Platten eines des ersten, des zweiten, des dritten und des vierten Satzes elektrisch mit dem negativen Anschluss (14.2) der Stromversorgungsquelle (14) verbunden sind und die leitenden Platten der anderen des ersten, des zweiten, des dritten und des vierten Satzes elektrisch von der Stromversorgungsquelle (14) isoliert sind.

3. Elektrolysezelle (2) nach Anspruch 1 oder 2, wobei der Betriebszyklus eine Vielzahl von aufeinanderfolgenden Betriebsphasen umfasst, die im Wesentlichen identische Betriebsdauern aufweisen.

4. Elektrolysezelle (2) nach einem der Ansprüche 1 bis 3, wobei die Steuereinheit (23) dazu konfiguriert ist, die Schaltvorrichtung (15) derart zu steuern, dass der Betriebszyklus Folgendes umfasst:
- eine erste Betriebsphase (P1), in der die Schaltvorrichtung (15) die leitenden Platten (9) des ersten Satzes mit dem positiven Anschluss (14.1) der Stromversorgungsquelle (14) verbindet, die leitenden Platten (11) des zweiten Satzes von der Stromversorgungsquelle (14) isoliert, die leitenden Platten (12) des dritten Satzes mit dem negativen Anschluss (14.2) der Stromversorgungsquelle (14) verbindet und die leitenden Platten (13) des vierten Satzes von der Stromversorgungsquelle (14) isoliert,
- eine zweite Betriebsphase (P2), in der die Schaltvorrichtung (15) die leitenden Platten (9) des ersten Satzes von der Stromversorgungsquelle (14) isoliert, die leitenden Platten (11) des zweiten Satzes mit dem negativen Anschluss (14.2) der Stromversorgungsquelle (14) verbindet, die leitenden Platten (12) des dritten Satzes von der Stromversorgungsquelle (14) isoliert und die leitenden Platten (13) des vierten Satzes mit dem positiven Anschluss (14.1) der Stromversorgungsquelle (14) verbindet,
- eine dritte Betriebsphase (P3), in der die Schaltvorrichtung (15) die leitenden Platten (9) des ersten Satzes mit dem negativen Anschluss (14.2) der Stromversorgungsquelle (14) verbindet, die leitenden Platten (11) des zweiten Satzes von der Stromversorgungsquelle (14) isoliert, die leitenden Platten (12) des dritten Satzes mit dem positiven Anschluss (14.1) der Stromversorgungsquelle (14) verbindet und die leitenden Platten (13) des vierten Satzes von der Stromversorgungsquelle (14) isoliert, und
- eine vierte Betriebsphase (P4), in der die Schaltvorrichtung (15) die leitenden Platten (9) des ersten Satzes von der Stromversorgungsquelle (14) isoliert, die leitenden Platten (11) des zweiten Satzes mit dem positiven Anschluss (14.1) der Stromversorgungsquelle (14) verbindet, die leitenden Platten (12) des dritten Satzes von der Stromversorgungsquelle (14) isoliert und die leitenden Platten (13) des vierten Satzes mit dem negativen Anschluss (14.2) der Stromversorgungsquelle (14) verbindet.

5. Elektrolysezelle (2) nach Anspruch 4, wobei der Betriebszyklus eine Wiederholung der ersten, der zweiten, der dritten und der vierten Betriebsphase umfasst.

6. Elektrolysezelle (2) nach einem der Ansprüche 1 bis 5, wobei die Stromversorgungsquelle ein elektrischer Generator ist.

7. Elektrolysezelle (2) nach einem der Ansprüche 1 bis 6, wobei jeder des ersten, des zweiten und des dritten Satzes eine gerade Anzahl leitender Platten umfasst.

8. Elektrolysezelle (2) nach einem der Ansprüche 1 bis 7, wobei jede leitende Platte einen Kern aus Titan und eine den jeweiligen Kern bedeckende Beschichtungsschicht umfasst.

9. Elektrolysezelle (2) nach einem der Ansprüche 1 bis 8, die einen in der Elektrolysekammer (4) angeordneten Träger (7) umfasst, wobei der Träger (7) einen ersten Endabschnitt (7.1), der dem Flüssigkeitseinlass (5) zugewandt ist, einen zweiten Endabschnitt (7.2), der dem Flüssigkeitsauslass (6) zugewandt ist, und einen Zwischenabschnitt (7.1) umfasst, der zwischen dem ersten und dem zweiten Endabschnitt (7.1, 7.2) angeordnet ist, wobei die leitenden Platten des ersten, des zweiten, des dritten und des vierten Satzes am Zwischenabschnitt (7.1) des Trägers (7) befestigt sind.

10. Elektrolysezelle (2) nach Anspruch 9, wobei der erste Endabschnitt (7.1) einen Querschnitt aufweist, der in Richtung eines Endes des Trägers (7), des dem Flüssigkeitseinlass (5) zugewandt ist, abnimmt.

11. Elektrolysezelle (2) nach Anspruch 9 oder 10, wobei der erste Endabschnitt (7.1) eine allgemeine Form eines Spitzbogens aufweist.

12. Elektrolysezelle (2) nach einem der Ansprüche 1 bis 11, die ferner eine Chloridquelle (8) umfasst, die fluidisch mit dem Flüssigkeitseinlass (5) des Behälters (3) verbunden ist.

13. Verfahren zur elektrolytischen Behandlung einer Flüssigkeit mit einer Elektrolysezelle (2), wobei das Behandlungsverfahren die folgenden Schritte umfasst:
- Bereitstellen eines Behälters, der eine Elektrolysekammer begrenzt und einen Flüssigkeitseinlass und einen Flüssigkeitsauslass umfasst, die fluidisch mit der Elektrolysekammer verbunden sind, wobei der Behälter eine Längsachse umfasst, die im Wesentlichen parallel zu einer Strömungsrichtung der zu behandelnden Flüssigkeit durch die Elektrolysekammer verläuft, wobei der Behälter einen ersten Satz leitender Platten, einen zweiten Satz leitender Platten, einen dritten Satz leitender Platten und einen vierten Satz leitender Platten beinhaltet, die in der Elektrolysekammer angeordnet und dazu bestimmt sind, mindestens teilweise in die zu behandelnde Flüssigkeit eingetaucht zu werden, wobei jede leitende Platte des zweiten Satzes zwischen einer leitenden Platte des ersten Satzes und einer leitenden Platte des dritten Satzes angeordnet ist, wobei jede leitende Platte des vierten Satzes zwischen einer leitenden Platte des dritten Satzes und einer leitenden Platte des ersten Satzes angeordnet ist, wobei die leitenden Platten des ersten, des zweiten, des dritten und des vierten Satzes elektrisch leitend sind und sich in Bezug auf die Längsachse des Behälters radial erstrecken,
- Bereitstellen einer Stromversorgungsquelle, die einen positiven Anschluss und einen negativen Anschluss umfasst, mit denen jede leitende Platte des ersten, des zweiten, des dritten und des vierten Satzes elektrisch verbunden werden kann, wobei die Stromversorgungsquelle dazu konfiguriert ist, die leitenden Platten des ersten, des zweiten, des dritten und des vierten Satzes mit Strom zu versorgen,
- Bereitstellen einer Schaltvorrichtung, die dazu konfiguriert ist, die Stromversorgung der leitenden Platten des ersten, des zweiten, des dritten und des vierten Satzes zu unterbrechen und die elektrische Verbindung zwischen den leitenden Platten des ersten, des zweiten, des dritten und des vierten Satzes und dem positiven und dem negativen Anschluss der Stromversorgungsquelle zu modifizieren, um die Polarität der leitenden Platten des ersten, des zweiten, des dritten und des vierten Satzes zu ändern, und
- Steuern der Schaltvorrichtung gemäß einem Betriebszyklus, in dem jede leitende Platte des ersten, des zweiten, des dritten und des vierten Satzes mehrere aufeinanderfolgende Zustände gemäß einer vorbestimmten Reihenfolge durchläuft, die einen verbundenen Zustand, in dem die leitende Platte eine erste Polarität hat, einen nicht verbundenen Zustand, in dem die leitende Platte elektrisch von der Stromversorgungsquelle isoliert ist, einen verbundenen Zustand, in dem die leitende Platte eine zweite Polarität hat, die der ersten Polarität entgegengesetzt ist, und einen nicht verbundenen Zustand umfasst, in dem die leitende Platte elektrisch von der Stromversorgungsquelle isoliert ist,
wobei der Steuerschritt darin besteht, die Schaltvorrichtung derart zu steuern, dass während mindestens einer Betriebsphase des Betriebszyklus die leitenden Platten eines des ersten, des zweiten, des dritten und des vierten Satzes elektrisch mit dem positiven Anschluss der Stromversorgungsquelle verbunden sind, die leitenden Platten eines des ersten, des zweiten, des dritten und des vierten Satzes elektrisch mit dem negativen Anschluss der Stromversorgungsquelle verbunden sind und die leitenden Platten der anderen des ersten, des zweiten, des dritten und des vierten Satzes elektrisch von der Stromversorgungsquelle isoliert sind, wobei jede leitende Platte, die elektrisch von der Stromversorgungsquelle isoliert ist, zwischen einer leitenden Platte, die elektrisch mit dem negativen Anschluss der Stromversorgungsquelle verbunden ist, und einer leitenden Platte, die elektrisch mit dem positiven Anschluss der Stromversorgungsquelle verbunden ist, angeordnet ist.

## Claims

1. An electrolysis cell (2) for an electrolytic treatment of a liquid, comprising at least:
- a container (3) delimiting an electrolytic chamber (4) and including a liquid inlet (5) and a liquid outlet (6) which are fluidly connected to the electrolysis chamber (4), the container (3) including a longitudinal axis (A),
- a first set of conductive plates (9), a second set of conductive plates (11), a third set of conductive plates (12) and a fourth set of conductive plates (13) which are disposed in the electrolysis chamber (4) and which are intended to be at least partially immersed in the liquid to be treated, each conductive plate (11) of the second set being disposed between a conductive plate (9) of the first set and a conductive plate (12) of the third set, each conductive plate (13) of the fourth set being disposed between a conductive plate (12) of the third set and a conductive plate (9) of the first set, the conductive plates (9, 11, 12, 13) of the first, second, third and fourth sets being electrically-conductive and extending radially with respect to the longitudinal axis (A) of the container (3),
- an electric power supply source (14) including a positive terminal (14.1) and a negative terminal (14.2) to which each conductive plate (9, 11, 12) of the first, second, third and fourth sets is adapted to be electrically connected, the electric power supply source (14) being configured to electrically power the conductive plates of the first, second, third and fourth sets,
- a switching device (15) configured to interrupt the electric power supply of the conductive plates of the first, second, third and fourth sets and to modify the electrical connection between the conductive plates of the first, second, third and fourth sets and the positive and negative terminals (14.1, 14.2) of the electric power supply source (14) so as to change the polarity of the conductive plates of the first, second, third and fourth sets, and
- a controller (23) configured to control the switching device (15) according to an operating cycle during which each conductive plate of the first, second, third and fourth sets passes through several successive states according to a predetermined sequence including a connected state in which said conductive plate is at a first polarity, a non-conductive state in which said conductive plate is electrically isolated from the electric power supply source (14), a connected state in which said conductive plate is at a second polarity opposite to the first polarity and a non-connected state in which said conductive plate is electrically isolated from the electric power supply source (14),
the controller (23) being configured to control the switching device (15) such that, during at least one operating phase of said operating cycle, the conductive plates of one of the first, second, third and fourth sets are electrically connected to the positive terminal (14.1) of the electric power supply source (14), the conductive plates of one of the first, second, third and fourth sets are electrically connected to the negative terminal (14.2) of the electric power supply source (14) and the conductive plates of the others of the first, second, third and fourth sets are electrically isolated from the electric power supply source (14), each conductive plate electrically isolated from the electric power supply source (14) being disposed between a conductive plate electrically connected to the negative terminal (14.2) of the electric power supply source (14) and a conductive plate electrically connected to the positive terminal (14.1) of the electric power supply source (14).

2. The electrolysis cell (2) according to claim 1, wherein the controller (23) is configured to control the switching device (15) such that, during each operating phase of said operating cycle, the conductive plates of one of the first, second, third and fourth sets are electrically connected to the positive terminal (14.1) of the electric power supply source (14), the conductive plates of one of the first, second, third and fourth sets are electrically connected to the negative terminal (14.2) of the electric power supply source (14) and the conductive plates of the others of the first, second, third and fourth sets are electrically isolated from the electric power supply source (14).

3. The electrolysis cell (2) according to claim 1 or 2, wherein the operating cycle includes a plurality of successive operating phases which have substantially identical operating durations.

4. The electrolysis cell (2) according to any one of claims 1 to 3, wherein the controller (23) is configured to control the switching device (15) such that the operating cycle includes:
- a first operating phase (P1) during which the switching device (15) connects the conductive plates (9) of the first set to the positive terminal (14.1) of the electric power supply source (14), isolates the conductive plates (11) of the second set from the electric power supply source (14), connects the conductive plates (12) of the third set to the negative terminal (14.2) of the electric power supply source (14), and isolates the conductive plates (13) of the fourth set from the electric power supply source (14),
- a second operating phase (P2) during which the switching device (15) isolates the conductive plates (9) of the first set from the electric power supply source (14), connects the conductive plates (11) of the second set to the negative terminal (14.2) of the electric power supply source (14), isolates the conductive plates (12) of the third set from the electric power supply source (14), and connects the conductive plates (13) of the fourth set to the positive terminal (14.1) of the electric power supply source (14),
- a third operating phase (P3) during which the switching device (15) connects the conductive plates (9) of the first set to the negative terminal (14.2) of the electric power supply source (14), isolates the conductive plates (11) of the second set from the electric power supply source (14), connects the conductive plates (12) of the third set to the positive terminal (14.1) of the electric power supply source (14), and isolates the conductive plates (13) of the fourth set from the electric power supply source (14), and
- a fourth operating phase (P4) during which the switching device (15) isolates the conductive plates (9) of the first set from the electric power supply source (14), connects the conductive plates (11) of the second set to the positive terminal (14.1) of the electric power supply source (14), isolates the conductive plates (12) of the third set from the electric power supply source (14), and connects the conductive plates (13) of the fourth set to the negative terminal (14.2) of the electric power supply source (14).

5. The electrolysis cell (2) according to claim 4, wherein the operating cycle includes a repetition of the first, second, third and fourth operating phases.

6. The electrolysis cell (2) according to any one of claims 1 to 5, wherein the electric power supply source is an electric generator.

7. The electrolysis cell (2) according to any one of claims 1 to 6, wherein each of the first, second and third sets includes an even number of conductive plates.

8. The electrolysis cell (2) according to any one of claims 1 to 7, wherein each conductive plate includes a titanium core and a coating layer covering the respective core.

9. The electrolysis cell (2) according to any one of claims 1 to 8, which includes a support (7) disposed in the electrolysis chamber (4), the support (7) including a first end portion (7.1) directed towards the liquid inlet (5), a second end portion (7.2) directed towards the liquid outlet (6) and an intermediate portion (7.1) located between the first and second end portions (7.1, 7.2), the conductive plates of the first, second, third and fourth sets being fastened to the intermediate portion (7.1) of the support (7).

10. The electrolysis cell (2) according to claim 9, wherein the first end portion (7.1) has a cross-section which decreases in the direction of an end of the support (7) directed towards the liquid inlet (5).

11. The electrolysis cell (2) according to claim 9 or 10, wherein the first end portion (7.1) has an ogive-like general shape.

12. The electrolysis cell (2) according to any one of claims 1 to 11, which further includes a chloride source (8) fluidly connected to the liquid inlet (5) of the container (3).

13. A method for electrolytic treatment of a liquid with an electrolysis cell (2), the treatment method comprising the following steps of:
- providing a container delimiting an electrolysis chamber and including a liquid inlet and a liquid outlet which are fluidly connected to the electrolysis chamber, the container including a longitudinal axis which is substantially parallel to a direction of flow of the liquid to be treated through the electrolysis chamber, the container containing a first set of conductive plates, a second set of conductive plates, a third set of conductive plates and a fourth set of conductive plates disposed in the electrolysis chamber and intended to be at least partially immersed in the liquid to be treated, each conductive plate of the second set being disposed between a conductive plate of the first set and a conductive plate of the third set, each conductive plate of the fourth set being disposed between a conductive plate of the third set and a conductive plate of the first set, the conductive plates of the first, second, third and fourth sets being electrically-conductive and extending radially with respect to the longitudinal axis of the container,
- providing an electric power supply source including a positive terminal and a negative terminal to which each conductive plate of the first, second, third and fourth sets is adapted to be electrically connected, the electric power supply source being configured to electrically power the conductive plates of the first, second, third and fourth sets,
- providing a switching device configured to interrupt the electric power supply of the conductive plates of the first, second, third and fourth sets and to modify the electrical connection between the conductive plates of the first, second, third and fourth sets and the positive and negative terminals of the electric power supply source so as to change the polarity of the conductive plates of the first, second, third and fourth sets, and
- controlling the switching device according to an operating cycle during which each conductive plate of the first, second, third and fourth sets passes through several successive states according to a predetermined sequence including a connected state in which said conductive plate is at a first polarity, a non-connected state in which said conductive plate is electrically isolated from the electric power supply source, a connected state in which said conductive plate is at a second polarity opposite to the first polarity and a non-connected state in which said conductive plate is electrically isolated from the electric power supply source,
the controlling step consisting in controlling the switching device such that, during at least one operating phase of said operating cycle, the conductive plates of one of the first, second, third and fourth sets are electrically connected to the positive terminal of the electric power supply source, the conductive plates of one of the first, second, third and fourth sets are electrically connected to the negative terminal of the electric power supply source and the conductive plates of the others of the first, second, third and fourth sets are electrically isolated from the electric power supply source, each conductive plate electrically isolated from the electric power supply source being disposed between a conductive plate electrically connected to the negative terminal of the electric power supply source and a conductive plate electrically connected to the positive terminal of the electric power supply source.
